# EUROPEAN PATENT APPLICATION

(11) **EP 3 178 588 A2**
(43) Date of publication of application: **14.06.2017**
(21) Application number: 16202764.3
(22) Date of filing: 07.12.2016
(51) Int. Cl.: B22F 3/105, B28B 1/00, B29C 67/00

(54) **ADJUSTING PROCESS PARAMETERS OF AN ADDITIVE MAHUFACTURING PROCESS TO REDUCE CONGLOMERATED POWDER IN CAVITY**

(30) Priority: 07.12.2015 US 201514960997
(71) Applicant: United Technologies Corporation, Farmington, CT 06032 (US)
(72) Inventor: BUTCHER, Evan, Manchester, CT 06042 (US); RIZZO Jr., John P., Vernon, CT 06066 (US); OSWALD, Caitlin, Ellington, CT 06029 (US); SMITH, Monica C., West Hartford, CT 06119 (US)
(74) Representative: Leckey, David Herbert

(57) **Abstract**

A method of making a part (32,34;82) includes creating a computer file (22) defining the part (32,34;82) in layers and a model of a body blank (80) to represent a space defined by a cavity (38) in the part (32,34;82). The part (32,34;82) is built using an additive manufacturing process. A layer of powdered material (26) is deposited into a powder bed. The powder bed is preheated by applying a first beam current with a first energy. A second beam current with a second energy level greater than the first energy level is applied to a first region of the layer of the powder bed not including a portion of the cavity (38). A second region of the powdered material (26) is selectively melted. The partially built part (32A) and layer of the powdered material (26) are lowered. Steps are repeated for additional layers in accordance with the computer file (22) to create the part (32,34;82).

## Description

### BACKGROUND

The present invention relates generally to additive manufacturing, and more particularly to additively manufacturing a part with a cavity.

In some metal additive manufacturing processes like electron beam powder bed fusion, heat input to the metal powder bed during the build process will melt a cross section of a solid part, but will also cause metal powder surrounding the solid part to become stuck together after the build process. This extra powder surrounding the part(s) therefore must be removed by some mechanical, abrasive, chemical, or vibratory method to retrieve the solid part inside.

### SUMMARY

According to one embodiment of the present invention, a method of making a part includes creating a computer file defining the part in layers and a model of a body blank to represent a space defined by a cavity in the part. The part is built using an additive manufacturing process that builds the part on a layer-by-layer basis. A layer of powdered material is deposited into the powder bed. The powder bed is preheated by applying a first beam current with a first energy level to the powder bed. A second beam current with a second energy level greater than the first energy level is applied to a first region of the layer of the powder bed that does not include a portion of the cavity. A second region of the powdered material is selectively melted to make a portion of a partially built part. The partially built part and the layer of the powdered material are lowered. Steps are repeated for additional layers in accordance with the computer file to create the part.

According to another embodiment, a method of additively manufacturing a part includes creating a computer file defining the part in layers, with the computer file including a cavity model and a solid portion model. A melt theme is created that includes defining a plurality of part envelopes, with each of the plurality of part envelopes including a respective power input level. The part is then built by the following steps. A first layer of powdered material is deposited into a powder bed. The powder bed is preheated to a first temperature in accordance with a first of the plurality of part envelopes. A first region of the powder bed is heated to a second temperature in accordance with a second of the plurality of part envelopes, the first region of the powder bed not including a portion of the cavity model. The second temperature is greater than the first temperature. A second region of the powdered material is melted in accordance with a third of the plurality of part envelopes, the third region including the cross-section layer of the part. The build platform is lowered. Steps are repeated for additional layers in accordance with the computer file to create the part.

According to another embodiment, a method of additively manufacturing a part includes creating a computer file defining the part in layers, with the computer file including a cavity model and a solid portion model. A melt theme is specified to include parameters relating to a plurality of energy inputs. A plurality of regions offset from a solid build model is specified. A layer of powdered material is deposited into a powder bed. A first region of the powder bed is preheated to a first temperature. A second region of the powder bed is preheated to a second temperature greater than the first temperature, with the second region being offset a first distance from a cross-sectional profile of the part. A third region of the powder bed is preheated to a third temperature greater than the second temperature, with the third region being offset a second distance from the cross-sectional profile of the part. Powder fusion is performed on a forth region of the powder bed including the cross-section layer of the part. The powder bed is lowered. Steps are repeated for additional layers in accordance with the computer file to create the part.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a perspective view of an additive manufacturing apparatus.
FIG. 2A is a section view of an additively manufactured part.
FIG. 2B is a section view of an additively manufactured part.
FIG. 3A is an elevation view of a cavity model according to an embodiment of the present disclosure.
FIG. 3B is an elevation view of a cavity model according to an embodiment of the present disclosure.
FIG. 4 is a flowchart of a method according to an embodiment of the present disclosure.
FIG. 5 is a plan view of an additive manufacturing bed.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

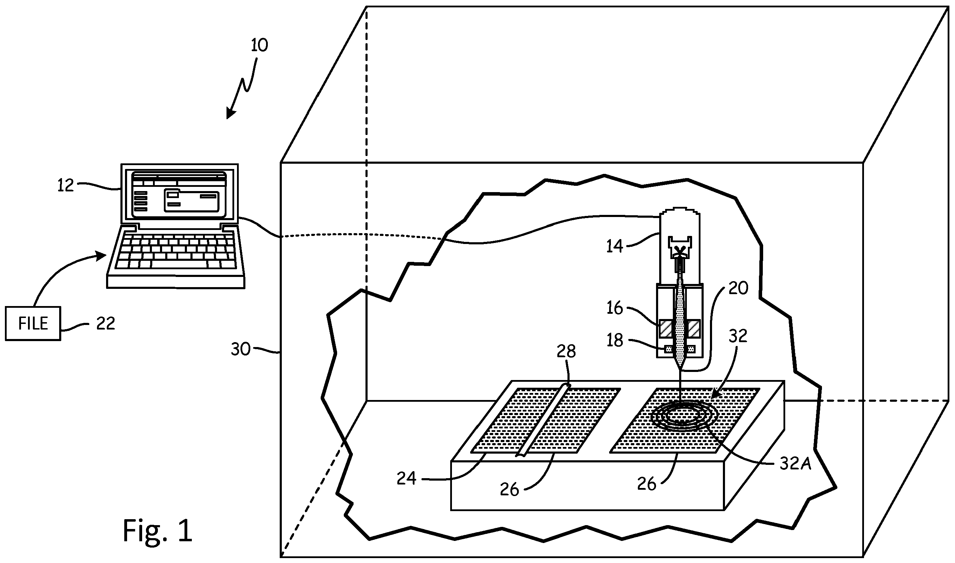

FIG. 1 is a perspective view of additive manufacturing apparatus 10. Additive manufacturing apparatus 10 can be configured for laser additive manufacturing, laser powder bed fusion, electron beam powder bed fusion, laser powder deposition, electron beam wire, and/or selective laser sintering to create a three-dimensional object out of powdered material.

In the illustrated embodiment, additive manufacturing apparatus 10 includes computer 12, electron beam energy source 14, focus coil 16, and deflection coil 18, which direct and guide electron beam 20 according to the build instructions from computer 12. Computer 12 receives build instructions for building a part from computer file 22. Electron beam energy source 14 can be any source of heating radiation such as an electron beam or laser. Additive manufacturing apparatus 10 also includes frame 24, powdered material 26, and coater 28, which are used for powder containment and application. Powdered material 26 can be titanium alloys, nickel alloys, aluminum alloys, steel alloys, cobalt-chrome alloys, copper alloys or other types of powdered metal alloys. Coater 28 is arranged along a surface of frame 24, and can be moved across the surface of frame 24. Coater 28 can be, for example, a knife blade or a roller.

Additive manufacturing apparatus 10 also includes build chamber 30, which contains electron beam energy source 14, focus coil 16, deflection coil 18, frame 24, powdered material 26, and coater 28. Build chamber 30 provides a hermetically sealed environment with the temperature within build temperature set to specific temperatures based on computer file 22.

A user creates computer file 22 for computer 12 that defines a part with particular features, such as part 32, in layers (that can be of the same or different thicknesses). Computer 12 then controls the electron beam energy source 14 to create the part. Electron beam energy source 14 creates electron beam 20 which can be used for melting, sintering, or cutting. Electron beam 20 is focused by focus coil 16, which is arranged to squeeze electron beam 20 to an appropriate size. Generally, deflection coil 18 directs electron beam 20 towards areas within frame 24, which holds powdered material 26. Generally, the areas of powdered material 26 that are melted or sintered form a layer of part 32. In FIG. 1, partially built part 32A is shown being built up on a layer-by-layer basis. Areas adjacent to partially built part 32A can remain unmelted or unsintered.

After each layer of partially built part 32A is finished, the build platform holding partially built part 32A can be lowered by the thickness of one layer of powdered material 26, and additional powdered material 26 can be added on top of the existing, partially built structures using coater 28. Then, a new layer of powdered material 26 is melted or sintered to the top of partially built part 32A, and the process is repeated. By repeating the process several times, a layer-by-layer object, such as a complete part can be manufactured.

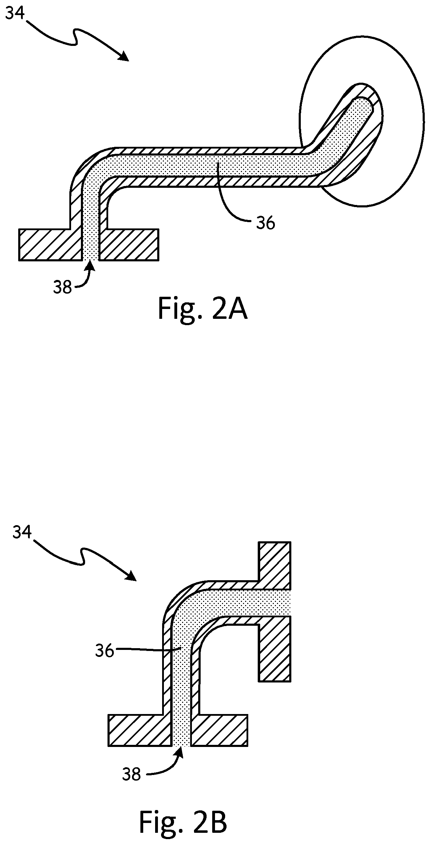

FIG. 2A is a section view of additively manufactured part 34. As can be seen in FIG. 2A, additively manufactured part 34 includes conglomerated powder 36 remaining in cavity 38 as a result of an additive manufacturing process, such as electron beam powder bed fusion. FIG. 2B is a section view of additively manufactured part 34. Similar to FIG. 2A, FIG. 2B shows conglomerated power 36 formed in cavity 38 of additively manufactured part 34.

In an additive manufacturing process such as electron beam powder bed fusion, energy input into a metal powder bed during the build process will melt a cross section of a solid part. However, the electron beam energy will also cause metal powder surrounding the solid part to become stuck together during the build process. As part of the electron beam powder fusion bed process, the entire layer of powdered material is semi-sintered to reduce the effects of powdered material scattering when the negatively charged electron beam is applied to the powder bed. Once the part is built, the semi-sintered layers of powdered material remain both outside and inside the cavity of the part. In order to finish the part, the extra semi-sintered metal powder surrounding and inside the part therefore must be removed by some mechanical, abrasive, chemical, or vibratory method to retrieve only the solid part. An example strategy to remove excess conglomerated, or semi-sintered, powder from the part can include accelerating like powder from a grit blast nozzle to liberate (knock loose) the semi-sintered particles from the part. Accelerated powder can be effective but only to a certain depth limit for removing semi-sintered powder from the external surfaces of the part, and enclosed volumes or cavity in the part falling within line-of-sight access from a point exterior to the part.

When building additively manufactured part 34 with an internal passage, conglomerated powder 36 becomes entrapped in the internal cavity. There are a few industry methods known to directly and quickly remove the conglomerated powder from internal passages. One example of a standard practice consists of repeatedly using the accelerated powder blast, combined with mechanically scraping conglomerated power out of the passage.

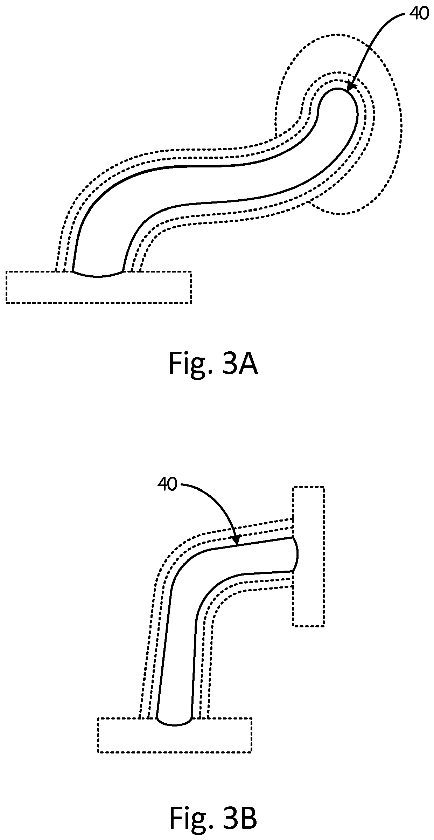

FIG. 3A is an elevation view of cavity model 40 according to an embodiment of the present disclosure. Cavity model 40 represents a model of a body blank to represent a space defined by a cavity in an additively manufactured part. FIG. 3B is an elevation view of cavity model 40 according to an embodiment of the present disclosure. Cavity model 40 includes a shape representing the passageway for an additively manufactured part, for example additively manufactured part 34 from FIGS. 2A and 2B. Cavity model 40 is created by modeling a part to be additively manufactured that includes a passageway or cavity, and the part of the model representing the final solid part is then removed from the model resulting in cavity model 40.

With the creation of cavity model 40, a user can apply process parameters to cavity model 40 in a way that locally reduces the effects of semi-sintering powder through a cavity of a part. Melt themes, which include designating certain energy levels to certain areas of the powdered material, can be applied to specific areas of the powdered material to designate portions of the part and corresponding pre-heat areas. Applying process parameters can be achieved through loading cavity model 40 into a melt theme which has a reduced energy input less than the required melt energy for intended solid bodies, and slightly less than a general pre-heat theme, which semi-sinters each entire layer around the additively manufactured part. Cavity model 40 allows for reducing the effects of preheating an entire layer of powder the same way, which can make conglomerated powder difficult to remove after an additive manufacturing part is completely built.

An example of how cavity model 40 is used during an additive manufacturing process is as follows. An additive manufacturing method includes creating a computer file defining a part in layers, with the computer file including a cavity model and a solid portion model representing the cavity and solid portions, respectively, of the part. A series of melt themes are assigned to a plurality of build models, which specify a power input level to be applied to each respective build model. The part is then built by the following steps. A first region is typically preheated to a certain temperature. A second region, excluding the interior cavity cross-section region, is offset some distance from the exterior of the solid part cross-sectional profile(s), and is preheated to a higher temperature than the first region. The third region, excluding the interior cavity cross-section region, is then preheated to an even higher temperature, and is more focused toward the solid part cross-sectional profile(s), yet still offset some distance on the exterior of the solid part cross-sectional profile(s). Finally, the forth region including the cross-section layer of the part(s) is heated to the appropriate temperature for powder fusion. The interior cavity region does not have any additional energy input. The build platform is lowered. The preceding steps are repeated for additional layers in accordance with the computer file to create the part. Excess powdered material is then removed from the part.

The benefits of using this method to avoid and/or reduce the semi-sintering action caused by the preheating process steps of prior art methods will decrease or eliminate the effort of removing semi-sintered powder from internal passages and voids from finished additively manufactured parts.

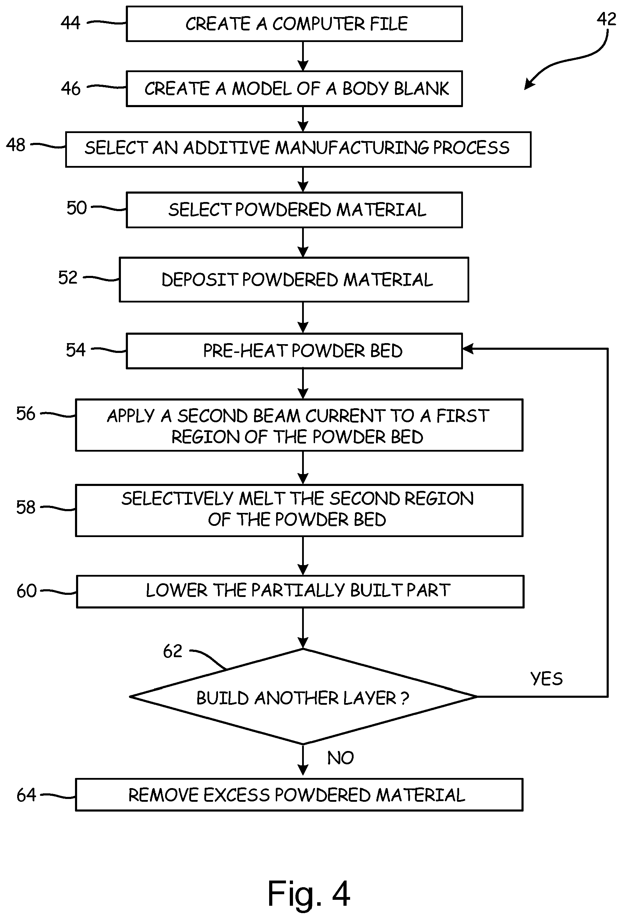

FIG. 4 is a flowchart of method 42 according to an embodiment of the present disclosure. Method 42 includes a series of steps to additively manufacture a part. In this embodiment, the part is formed to include a first end, a second end, and a passage extending through a cavity from the first end to the second end of the part. The part can also include at least a first end with and a passage extending from a cavity to the first end. While electron beam powder bed fusion is described, any other forms of additive manufacturing or 3D printing can be used.

Step 44 includes creating a computer file defining the part in layers. The part includes a cavity and a solid portion. Step 46 includes creating a computer file defining the part in layers and a model of a body blank to represent a space defined by a cavity in the part. Step 48 includes selecting an additive manufacturing process to build the part on a layer-by-layer basis, with the additive manufacturing process being either electron beam melting or electron beam powder bed additive manufacturing. Step 50 includes selecting the type of powdered material. Step 52 includes depositing a layer of powdered material.

Step 54 includes preheating the powder bed by applying a first beam current to the powder bed by scanning an electron beam over the powder bed located in the build chamber. An example range of current values for the first beam current can include a value less than 10 milliamps and greater than 0 milliamps. An example of a pre-heat temperature for the powder bed or build chamber can include a temperature of 400° C or greater. In this embodiment, the energy beam includes an electron beam, but can also include other types of energy beams such as a laser.

Step 56 includes applying a second beam current to a first region of the powder bed. The first region of the powder bed does not include a portion of the cavity. The second beam current includes a second energy level greater than the first energy level. An example range of current values for the second beam current can include a value greater than 10 milliamps.

Step 58 includes selectively melting a second region of the powder bed to make a portion of a partially built part. Step 60 includes lowering the partially built part and the powder bed. Step 62 includes determining whether additional steps need to be repeated for additional layers in accordance with the computer file to create the part. Step 64 includes removing excess powdered material from the part by spraying the part with accelerated powdered material or is removed by some other mechanical, abrasive, chemical, or vibratory method.

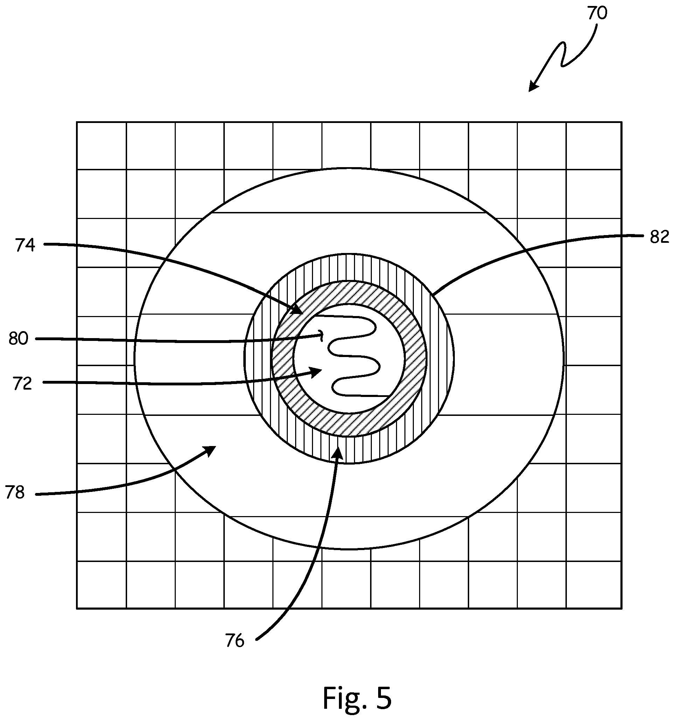

FIG. 5 is a plan view of additive manufacturing bed 70 which can be used for the method described. Additive manufacturing bed 70 includes a plurality of build envelope regions including first build envelope region 72, second build envelope region 74, third build envelope region 76, and fourth build envelope region 78. First build envelope region 72 includes a layer of powdered material of body blank 80 which represents a negative cavity of part 82. Second build envelope region 74 includes a layer of powdered material of part 82. Third build envelope region 76 includes a layer of powdered material surrounding second build envelope region 74 and part 82. Fourth build envelope region 78 includes a layer of powdered material surrounding third build envelope region 76.

In order to reduce or eliminate conglomerated powder in the final form of part 82, first build envelope region 72 is assigned a first heat theme including a first pre-heat temperature less than each of the other build envelope regions. For example, the first pre-heat temperature of the first heat theme is set at a temperature less than a third pre-heat temperature assigned to a third heat theme of third build envelop 76. Second build envelope region 74 includes a second heat theme including a second pre-heat temperature greater than each of the first and third temperatures. Second build envelope region 74 includes the highest temperature because second build envelope region 74 represents the portion of the powder in additive manufacturing bed 70 to be melted to form a layer of part 82.

Reducing the temperature applied to first build envelope region 72 makes it easier to remove conglomerated powder from part 82 because the powder located in the cavity of part 82 when part 82 is completed is not as sintered as the powder located in second build envelope region 74 and third build envelope region 76. With a smaller amount of sintered powder in the cavity of part 82, tools such as hand tools, wire brushes, pipe cleaners, or other tools to mechanically remove powder from internal passages are no longer needed.

### Discussion of Possible Embodiments

The following are non-exclusive descriptions of possible embodiments of the present invention.

A method of making a part can include creating a computer file defining the part in layers and a model of a body blank that can represent a space defined by a cavity in the part. The part can be built using an additive manufacturing process that builds the part on a layer-by-layer basis. A layer of powdered material can be deposited into a powder bed. The powder bed can be preheated by applying a first beam current with a first energy level to the powder bed. A second beam current with a second energy level greater than the first energy level can be applied to a first region of the layer of the powder bed that possibly does not include a portion of the cavity. A second region of the powder bed can be selectively melted to make a portion of a partially built part. The partially built part and the powder bed can be lowered. Steps can be repeated for additional layers in accordance with the computer file to create the part.

The method of the preceding paragraph can optionally include, additionally and/or alternatively, any one or more of the following features, configurations and/or additional components:
a further embodiment of the foregoing method, wherein the method can further include removing excess powdered material from the part;
a further embodiment of the foregoing method, wherein the method can further include forming the part to include at least a first end and a passage extending from the cavity to the first end;
a further embodiment of the foregoing method, wherein the additive manufacturing process can be selected from the group consisting of electron beam melting and electron beam powder bed additive manufacturing;
a further embodiment of the foregoing method, wherein applying the first beam current can further include setting the first beam current at a first value less than 10 milliamps and greater than 0 milliamps and scanning the first region with the first beam current;
a further embodiment of the foregoing method, wherein removing excess powdered material from the part can further include a removal process, wherein the removal process can be selected from the group consisting of spraying the part with accelerated powdered material, abrading the excess powdered material, chemically deconstructing the excess powdered material, and/or vibrating the part and excess powdered material;
a further embodiment of the foregoing method, wherein the method can further include preheating a build chamber to a temperature of greater than 400° C by scanning an electron beam over the powder bed that can be located in the build chamber; and/or
a further embodiment of the foregoing method, wherein the powdered material can be a powdered metal alloy.

A method of additively manufacturing a part can include creating a computer file defining the part in layers. The computer file can include a cavity model and a solid portion model. A melt theme can be created that includes defining a plurality of part envelopes. Each of the plurality of part envelopes can include a respective power input level. The part can be built by the following steps. A first layer of powdered material can be deposited into a powder bed. The powder bed can be preheated to a first temperature in accordance with a first of the plurality of part envelopes. A first region of the powder bed can be heated to a second temperature in accordance with a second of the plurality of part envelopes. The first region of the powder bed possibly does not include a portion of the cavity model. The second temperature can be greater than the first temperature. A second region of the powdered material can be melted in accordance with a third of the plurality of part envelopes. The third region can include the cross-section layer of the part. The build platform can be lowered. Steps can be repeated for additional layers in accordance with the computer file to create the part.

The method of the preceding paragraph can optionally include, additionally and/or alternatively, any one or more of the following features, configurations and/or additional components:
a further embodiment of the foregoing method, wherein the method can further include removing excess powdered material from the part;
a further embodiment of the foregoing method, wherein the method can further include forming the part to include at least a first end and a passage extending from the cavity to the first end;
a further embodiment of the foregoing method, wherein the additive manufacturing process can be selected from the group consisting of electron beam melting and electron beam powder bed additive manufacturing;
a further embodiment of the foregoing method, wherein the method can further include preheating a build chamber to a temperature of greater than 400° C by scanning an electron beam over the powder bed located in the build chamber; and/or
a further embodiment of the foregoing method, wherein the powdered material can be a powdered metal alloy.

A method of additively manufacturing a part can include creating a computer file defining the part in layers. The computer file can include a cavity model and a solid portion model. A melt theme can be specified to include parameters relating to a plurality of energy inputs. A plurality of regions offset from a solid build model can be specified. A layer of powdered material can be deposited into a powder bed. A first region of the powder bed can be preheated to a first temperature. A second region of the powder bed can be preheated to a second temperature greater temperature than the first temperature. The second region can be offset a first distance from a cross-sectional profile of the part. A third region of the powder bed can be preheated to a third temperature greater temperature than the second temperature. The third region can be offset a second distance from the cross-sectional profile of the part. Powder fusion can be performed on a fourth region of the powder bed including the cross-section layer of the part. The powder bed can be lowered. Steps can be repeated for additional layers in accordance with the computer file to create the part.

The method of the preceding paragraph can optionally include, additionally and/or alternatively, any one or more of the following features, configurations and/or additional components:
a further embodiment of the foregoing method, wherein the method can further include removing excess powdered material from the part;
a further embodiment of the foregoing method, wherein performing powder fusion on a fourth region can further include heating the fourth region to a third temperature greater than or equal to a melt temperature of the powder bed;
a further embodiment of the foregoing method, wherein the method can further include pre-heating a build chamber to a temperature of greater than 400° C by scanning an electron beam over the powder bed located in the build chamber;
a further embodiment of the foregoing method, wherein the additive manufacturing process can be selected from the group consisting of electron beam melting and electron beam powder bed additive manufacturing; and/or
a further embodiment of the foregoing method, wherein the powdered material can be a powdered metal alloy.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of making a part (32;34;82), the method comprising:
(a) creating a computer file (22) defining the part (32;34;82) in layers and a model of a body blank (80) to represent a space defined by a cavity (38) in the part (32;34;82);
(b) building the part (32;34;82) using an additive manufacturing process that builds the part (32;34;82) on a layer-by-layer basis, wherein building the part (32;34;82) comprises:
i. depositing a layer of a powdered material (26) into a powder bed;
ii. preheating the powder bed by applying a first beam current to the powder bed, wherein the first beam current includes a first energy level;
iii. applying a second beam current to a first region of the powder bed, wherein the first region of the powder bed does not include a portion of the cavity (38), and further wherein the second beam current comprises a second energy level greater than the first energy level;
iv. selectively melting a second region of the powder bed to make a portion of a partially built part (32A);
v. lowering the partially built part (32A) and the powder bed; and
vi. repeating steps (i)-(v) for additional layers in accordance with the computer file (22) to create the part (32;34;82).

2. The method of claim 1, wherein applying the first beam current includes setting the first beam current at a first value less than 10 milliamps and greater than 0 milliamps and scanning the powder bed with the first beam current.

3. A method of additively manufacturing a part (32;34;82), the method comprising:
(a) creating a computer file (22) defining the part (32;34;82) in layers, the computer file (22) comprising a cavity model (40) and a solid portion model;
(b) creating a melt theme that includes defining a plurality of part envelopes, wherein each of the plurality of part envelopes comprises a respective power input level;
(c) building the part (32;34;82), wherein building the part (32;34;82) comprises:
i. depositing a layer of a powdered material (26) into a powder bed;
ii. preheating the powder bed to a first temperature in accordance with a first of the plurality of part envelopes;
iii. heating a first region of the powder bed to a second temperature in accordance with a second of the plurality of part envelopes, wherein the first region of the powder bed does not include a portion of the cavity model (40), and further wherein the second temperature is greater than the first temperature;
iv. melting a second region of the powdered material (26) in accordance with a third of the plurality of part envelopes, wherein the second region includes the cross-section layer of the part (32;34;82);
v. lowering the build platform; and
vi. repeating steps (i)-(vi) in accordance with the computer file (22) to create the part (32;34;82).

4. A method of additively manufacturing a part (32;34;82) comprising:
(a) creating a computer file (22) defining the part (32;34;82) in layers, the computer file (22) comprising a cavity model (40) and a solid portion model;
(b) specifying a melt theme including parameters relating to a plurality of energy inputs;
(c) specifying a plurality of regions offset from a solid build model;
i. depositing a layer of a powdered material (26) into a powder bed;
ii. preheating a first region of the powder bed to a first temperature;
iii. preheating a second region of the powder bed to a second temperature greater than the first temperature, wherein the second region is offset a first distance from a cross-sectional profile of the part (32;34;82);
iv. preheating a third region of the powder bed to a third temperature greater than the second temperature, wherein the third region is offset a second distance from the cross-sectional profile of the part (32;34;82);
v. performing powder fusion on a fourth region of the powder bed including the cross-section layer of the part (32;34;82);
vi. lowering the powder bed;
(d) repeating steps (i)-(vi) in accordance with the computer file (22) to create the part (32;34;82).

5. The method of claim 4, wherein performing powder fusion on a fourth region further includes heating the fourth region to a third temperature greater than or equal to a melt temperature of the powder bed.

6. The method of any preceding claim, wherein the method further comprises:
removing excess powdered material (26) from the part (32;34;82).

7. The method of claim 6, wherein removing excess powdered material (26) from the part (32;34;82) comprises a removal process, wherein the removal process is selected from the group consisting of spraying the part with accelerated powdered material, abrading the excess powdered material (26), chemically deconstructing the excess powdered material (26), and vibrating the part and excess powdered material (26).

8. The method of any preceding claim, wherein the method further comprises:
forming the part (32;34;82) to include at least a first end and a passage
extending from the cavity (38) to the first end.

9. The method of any preceding claim, wherein the additive manufacturing process is selected from the group consisting of electron beam melting and electron beam powder bed additive manufacturing.

10. The method of any preceding claim, wherein the method further comprises:
preheating a build chamber (30) to a temperature of greater than 400° C by
scanning an electron beam (20) over the powder bed located in the build chamber (30).

11. The method of any preceding claim, wherein the powdered material (26) includes a powdered metal alloy.
